# FASCICULE DE BREVET EUROPEEN

(11) **EP 2 831 623 B1**
(45) Date de publication et mention de la délivrance du brevet: **20.12.2017**
(21) Numéro de dépôt: 13715378.9
(22) Date de dépôt: 27.03.2013
(51) Int. Cl.: G01S 17/06, G01S 17/88, G01S 17/89, F41G 1/48, G01S 17/02, F41G 3/06, F41G 3/16

(54) **PROCEDE D'ACQUISITION DES COORDONNEES D'UN POINT DE DECLENCHEMENT D'UN PROJECTILE ET CONDUITE DE TIR METTANT EN UVRE UN TEL PROCEDE**
VERFAHREN ZUR ERFASSUNG DER KOORDINATEN EINES AUSLÖSUNGSPUNKTS EINES GESCHOSSES UND ABSCHUSSSTEUERUNG MIT SOLCH EINEM VERFAHREN
METHOD FOR ACQUIRING THE COORDINATES OF A TRIGGERING POINT OF A PROJECTILE AND FIRE CONTROL IMPLEMENTING SUCH A METHOD

(30) Priorité: 29.03.2012 FR 1200953
(43) Date de publication de la demande: 04.02.2015
(73) Titulaire: NEXTER Systems, 42328 Roanne Cedex (FR)
(72) Inventeur: MULLER, Sylvain, F-18023 Bourges Cedex (FR)
(74) Mandataire: Chaillot, Geneviève
(86) Numéro de dépôt international: PCT/FR2013/050656
(87) Numéro de publication internationale: WO 2013/144502

(56) Documents cités:
- US-A- 4 386 848
- US-A1- 2003 140 775
- US-B1- 6 422 508

## Description

Le domaine technique de l'invention est celui des procédés permettant l'acquisition des coordonnées d'un point de déclenchement d'un projectile sur trajectoire et au-dessus d'une portion de terrain sur laquelle se trouve un objectif.

L'invention vise en particulier les conduites de tir pouvant être associées à une arme tirant des projectiles explosifs, ou des rafales de tels projectiles.

Les conduites de tir permettent de fournir les coordonnées d'un point de déclenchement pour un projectile tiré par l'arme.

Il est classique de mettre en oeuvre une conduite de tir associant un télémètre laser et un calculateur balistique. Le télémètre permet de déterminer la distance à laquelle se trouve une cible. Le calculateur détermine à partir de cette distance les angles de site et de gisement à donner à l'arme ainsi que la programmation qui doit être donnée au projectile à tirer, par exemple la temporisation de la mise à feu du projectile. Les conduites de tir connues sont particulièrement bien adaptées lorsque la cible est visible, de taille suffisante et facilement repérable, donc lorsque la distance à la cible peut être facilement mesurée. On connaît ainsi par le brevet US2003/0140775 une conduite de tir comportant des moyens de visée et d'acquisition de cible qui permettent une reconstruction en trois dimensions de la zone visée. La conduite de tir ainsi décrite permet d'améliorer l'acquisition de cibles de dimensions importantes (telles des véhicules).

Ces conduites de tir sont par contre inadaptées à l'acquisition de cibles de petite taille, dispersées ou masquées. Ces dernières sont en effet pratiquement impossibles à télémétrer. L'opérateur doit alors effectuer plusieurs tirs de réglage pour déterminer la bonne distance de déclenchement des projectiles.

L'invention a pour but de proposer un procédé d'acquisition des coordonnées d'un point de déclenchement d'un projectile, procédé permettant d'engager d'emblée une cible de petite taille, dispersée ou temporairement ou partiellement masquée et avec une bonne probabilité d'interception.

Ainsi l'invention a pour objet un procédé d'acquisition des coordonnées d'un point de déclenchement d'un projectile ou d'une rafale de projectiles sur trajectoire et au-dessus d'une portion de terrain sur laquelle se trouve un objectif, procédé caractérisé en ce qu'il comporte les étapes suivantes:
on procède à une acquisition en trois dimensions de la portion de terrain à l'aide d'un moyen d'observation laser,
on construit par calcul à partir de cette acquisition, puis on affiche sur un moyen de visualisation destiné à un opérateur, une image de la portion de terrain avec une direction d'observation plongeante, c'est à dire une direction d'observation à partir d'un point situé à la verticale et plus haut que le moyen d'observation,
on positionne, d'une façon modifiable par l'opérateur, sur l'image ainsi calculée une zone d'efficacité qui est une image d'une surface ou d'un volume géométrique permettant de visualiser l'aire ou le volume d'efficacité du projectile ou de la rafale considéré lorsqu'il ou elle est déclenché au niveau d'un point de déclenchement,
on récupère les coordonnées du point de déclenchement souhaité pour le projectile ou la rafale lorsque l'opérateur a choisi la localisation qui lui convient après avoir déplacé la dite zone sur l'image du terrain.

Selon un mode particulier de réalisation, l'orientation de la direction d'observation pourra être modifiable par l'opérateur lors de l'acquisition.

L'invention a également pour objet une conduite de tir mettant en oeuvre un tel procédé et pouvant être associée à une arme tirant des projectiles ou des rafales de projectiles et permettant de fournir les coordonnées d'un point de déclenchement pour un projectile ou une rafale tiré par l'arme, conduite de tir caractérisée en ce qu'elle comprend:
au moins un moyen d'observation laser permettant l'acquisition des coordonnées en trois dimensions d'une portion de terrain observée,
un calculateur pouvant reconstruire à l'aide d'un algorithme approprié au moins une image de la portion de terrain dont les coordonnées ont été acquises, image qui est affichée sur un moyen de visualisation avec une direction d'observation plongeante, c'est à dire une direction d'observation à partir d'un point situé à la verticale et plus haut que le moyen d'observation,
un moyen de commande destiné à un utilisateur et permettant de positionner et déplacer sur l'image du terrain une zone d'efficacité qui est elle-même une image d'une surface ou d'un volume géométrique permettant de visualiser l'aire ou le volume d'efficacité du projectile ou de la rafale considéré lorsqu'il ou elle est déclenché au niveau d'un point de déclenchement,
le calculateur déterminant de façon continue les coordonnées du point de déclenchement lorsque la zone d'efficacité est déplacée par l'opérateur,
un moyen de validation permettant à l'utilisateur de choisir une localisation particulière de la zone d'efficacité, le calculateur fournissant alors les coordonnées du point de déclenchement souhaité pour le projectile ou la rafale.

Avantageusement, le calculateur peut être associé à des premiers moyens mémoires qui incorporent une modélisation géométrique des zones d'efficacité pour les projectiles ou rafales de projectiles associées à différents points de déclenchement.

L'image de la zone d'efficacité pourra être semi-transparente.

L'image de la zone d'efficacité pourra être dans une couleur différente de celle du reste de l'image.

Des moyens de commande pourront permettre de modifier l'orientation de la direction d'observation lors de l'acquisition par un opérateur.

Selon un mode particulier de réalisation, le moyen d'observation est une caméra optique ou thermique couplée à un capteur laser 3D, l'image en trois dimensions étant obtenue en associant à chaque point de l'image de la caméra une information de distance acquise par le capteur laser 3D.

L'invention sera mieux comprise à la lecture de la description qui va suivre d'un mode particulier de réalisation, description faite en référence aux dessins annexés et dans desquels :
- la figure 1 montre une portion de terrain sur laquelle se trouvent des cibles et un véhicule équipé d'un système d'arme et d'une conduite de tir selon l'invention,
- la figure 2 montre une image du terrain tel que visualisée par le tireur à partir de la conduite de tir, et avant la mise en oeuvre de l'invention,
- la figure 3 est un schéma décrivant l'architecture de la conduite de tir selon l'invention,
- la figure 4 montre une image du terrain après mise en oeuvre de l'invention.

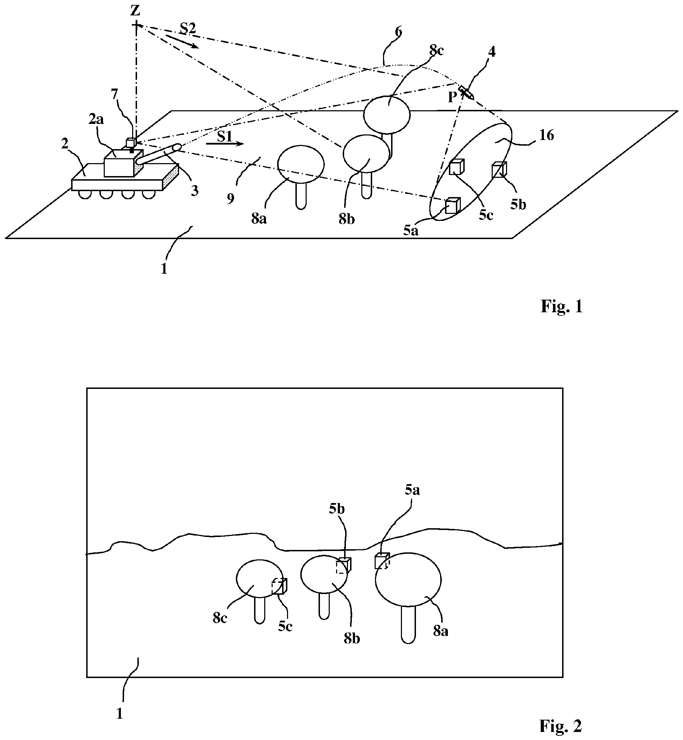

En se reportant à la figure 1, on a représenté une portion de terrain 1 sur laquelle se trouve un véhicule 2 équipé d'une tourelle 2a portant un tube d'arme 3.

Le tube d'arme 3 est destiné à tirer des projectiles 4 explosifs en direction de cibles 5a,5b,5c réparties sur le terrain 1. Un seul projectile 4 est représenté ici sur sa trajectoire 6.

Le tube d'arme est orientable en site et en gisement par rapport au véhicule. La tourelle 2a peut ainsi pivoter suivant un axe vertical (réglage en gisement) et le tube 3 peut basculer par rapport à la tourelle 2a suivant un axe sensiblement horizontal (réglage en site). Des motorisations appropriées sont associées à ces réglages en site et en gisement du tube d'arme 3.

La tourelle 2a porte également un moyen d'observation 7 qui est ici constitué par une caméra laser. Ce moyen d'observation 7 est couplé à une conduite de tir (non visible sur la figure 1) qui est interne à la tourelle 2a et qui permet de commander les motorisations assurant le pointage de la tourelle 2a et du tube 3 de l'arme en direction des cibles 5a,5b,5c.

La conduite de tir assurera aussi la programmation des projectiles tirés par le tube. Cette programmation comporte la mise en place, par une interface de programmation, dans une mémoire de la fusée du projectile d'un instant de déclenchement du projectile à l'issue de l'instant de tir.

Les cibles 5a, 5b, 5c sont de petites dimensions, par exemple des véhicules légers ou des groupes de fantassins.

Les cibles sont par ailleurs partiellement masquées vis à vis du véhicule 2 par des éléments de paysage, tels que des arbres (ou des buissons ou arbustes) 8a, 8b, 8c.

On a représenté sur la figure 1 par un cône pointillé 9 le secteur d'observation du moyen d'observation 7. Le moyen d'observation 7 regarde donc le terrain suivant une direction S1 qui est confondue avec l'axe du cône 9.

La figure 2 montre l'image du terrain 1 telle qu'elle est fournie directement sur un écran de la conduite de tir à partir du moyen d'observation 7.

On remarque que les cibles 5a, 5b et 5c sont partiellement masquées par les arbres 8a, 8b et 8c. Une télémétrie des cibles à partir de la conduite de tir est alors difficile ou impossible.

Les arbres 8a,8b,8c interceptent les signaux de télémétrie laser, conduisant à une mauvaise programmation de l'instant de déclenchement du projectile 4 sur sa trajectoire.

Une erreur de programmation conduit à une diminution importante de la probabilité d'atteinte. On a pu vérifier que, pour un tir d'une rafale de projectiles de moyen calibre à une distance de l'ordre de 1000 mètres, une erreur de programmation d'une dizaine de mètres conduisait à une diminution de probabilité d'atteinte pouvant atteindre 50%.

Conformément à une caractéristique de l'invention, le moyen d'observation 7 permet de réaliser une acquisition en trois dimensions (3D) de la portion de terrain 1.

Un moyen d'observation pouvant faire une telle acquisition 3D est déjà connu.

On peut aussi utiliser comme moyen d'observation une caméra optique ou thermique couplée à un télémètre laser à séquence (ou capteur laser en trois dimensions ou 3D) dont on fait varier la direction d'observation à l'aide d'un microbalayage. Dans ce cas l'image en trois dimensions est obtenue en associant à chaque point de l'image de la caméra une information de distance acquise par le télémètre laser.

Après l'acquisition de la scène par le moyen d'observation 7, la conduite de tir dispose donc, non plus d'une simple image en deux dimensions comme visible à la figure 2, mais d'une banque de données d'images avec des coordonnées dans trois directions de l'espace. Cette banque de données peut ensuite conformément à l'invention être utilisée pour reconstruire une image du terrain suivant une direction d'observation différente de la direction S1, par exemple suivant la direction plongeante S2 qui est représentée à la figure 1 et qui correspond pratiquement à une observation à partir d'un point Z situé à la verticale du moyen d'observation 7.

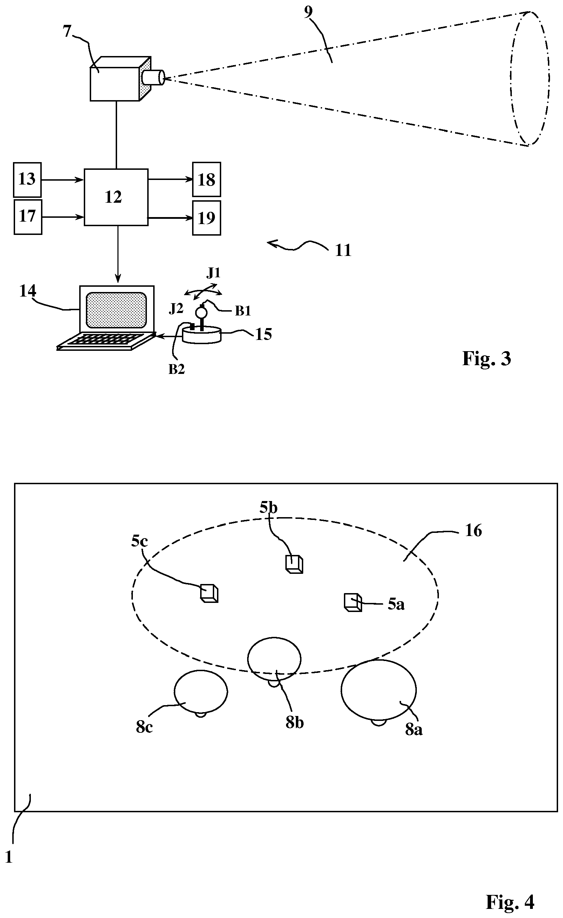

La figure 3 schématise une conduite de tir 11 selon l'invention.

Cette conduite de tir 11 est destinée à fournir les coordonnées du point de déclenchement P pour le projectile 4 sur sa trajectoire.

Elle comprend le moyen d'observation laser 7 qui permet l'acquisition des coordonnées en trois dimensions de la portion de terrain 1 qui est observée.

Elle comprend aussi un calculateur 12 qui est couplé à des second moyens mémoire 13 permettant de stocker la banque de données d'images qui est obtenue après acquisition d'informations par le moyen d'observation 7.

Le calculateur 12 incorpore un algorithme permettant de reconstruire au moins une image de la portion de terrain 1 dont les coordonnées ont été acquises, image qui est construite suivant une direction d'observation plongeante (telle que S2), par exemple à partir d'un point Z situé à la verticale du moyen d'observation 7. Cette image est affichée sur un moyen de visualisation 14, tel qu'un écran.

On appelle direction d'observation plongeante une direction d'observation qui est inclinée de haut en bas vers la portion de terrain 1. Une telle direction d'observation correspond à celle qui serait obtenue à partir d'un point d'observation (point Z) situé plus haut que le moyen d'observation 7 donc permettant d'avoir une meilleure visibilité du terrain.

L'image est reconstituée par exemple par projection géométrique sur un plan perpendiculaire à la direction de visée S1.

La conduite de tir 11 comporte aussi un moyen de commande 15 réalisé ici sous la forme d'un levier (ou palonnier) manoeuvrable suivant deux directions orthogonales J1 et J2. Le palonnier est destiné à l'utilisateur et il permet tout d'abord à ce dernier de choisir l'orientation de la direction d'observation S2.

La figure 4 montre ainsi le terrain 1 observé suivant la direction plongeante S2. La visibilité des cibles 5a, 5b et 5c a été augmentée.

On a représenté sur la figure 4 les cibles entières. Une telle image n'est bien entendu possible que si le feuillage des arbres 8a,8b,8c n'est pas totalement opaque et qu'il est donc possible de réaliser une acquisition de données relatives à la forme des cibles complètes. Si les cibles sont partiellement masquées et que leur forme cachée par le feuillage n'est pas accessible, l'image reconstruite ne comprendra que les parties des cibles qui ne sont pas masquées. Cette image reconstruite améliore cependant la vision du terrain.

Les distances relatives entre les cibles et les arbres peuvent être évaluées. La figure 4 montre une image plane en projection sur le plan de la figure. Il est bien entendu que l'écran 14 de la conduite de tir permet de visualiser une image du terrain en relief, exploitant pleinement les informations en trois dimensions disponibles dans la banque d'image 13.

Une fois une direction d'observation S2 choisie, ce qui peut être effectué par une action sur un bouton de commande B1 du palonnier 15, l'utilisateur peut suivant une autre caractéristique de l'invention, utiliser le palonnier 15 (ou un autre actionneur) pour positionner et déplacer sur l'image du terrain une zone d'efficacité 16 (figures 1 et 4).

Cette zone 16 est une image, construite par le calculateur 12, d'une surface ou d'un volume géométrique qui permet de visualiser l'aire ou le volume d'efficacité des éclats engendrés par le projectile considéré lorsqu'il est déclenché au niveau d'un point de déclenchement P (figure 1).

On a représenté sur les figures cette zone d'efficacité sous la forme d'un cône et de ses sections elliptiques pour la simplification de l'exposé. Il est bien entendu que le volume qui sera superposé à l'image du terrain pourra avoir une forme différente qui dépendra des caractéristiques du projectile 4 mis en oeuvre. Les caractéristiques géométriques des zones d'efficacité 16 associées à différents points P de déclenchement sont incorporées dans des premiers moyens mémoires 17 couplés au calculateur 12.

Il est classique lors de la définition d'un projectile de mesurer la répartition des éclats engendrés par l'explosion du projectile à différentes distances de ce dernier.

On peut ensuite modéliser géométriquement la zone d'efficacité d'un projectile initié à un point donné. Dans un souci de simplification, le volume géométrique de la zone 16 sera choisi tel qu'il correspond à une répartition des éclats engendrés permettant d'assurer une probabilité d'atteinte ou de neutralisation donnée. Une telle probabilité correspond par exemple à un niveau minimal d'énergie pour les éclats et/ou à une densité minimale des éclats.

On comprend qu'il s'agit de données propres à un type de projectile donné et qui ne dépendent pas des caractéristiques du terrain 1 et des cibles qui s'y trouvent.

On peut donc associer systématiquement à tout point de l'espace un volume géométrique 16 qui correspond à la probabilité d'atteinte souhaitée. Cette modélisation de zone d'efficacité n'est cependant généralement mise en oeuvre que lors des étapes de conception des projectiles. L'invention propose de la mettre en oeuvre opérationnellement au niveau d'une conduite de tir.

Suivant l'invention, ce volume 16 est déplacé par l'utilisateur sur l'image en deux ou trois dimensions du terrain 1 telle qu'elle a été reconstruite. Cette image de la zone d'efficacité 16 est semi-transparente et n'occulte donc pas les cibles potentielles 5a, 5b et 5c. Elle pourra aussi avoir une couleur différente de celle du reste de l'image afin de faciliter sa visualisation.

L'utilisateur peut donc aisément déplacer la zone d'efficacité 16 afin de déterminer la position qui permet la neutralisation d'une ou plusieurs cibles avec la probabilité d'atteinte souhaitée.

Lors du déplacement de la zone 16 à l'aide du palonnier 15, le calculateur 12 détermine de façon continue les coordonnées du point P de déclenchement correspondant au positionnement de la zone d'efficacité 16. Ces coordonnées sont en effet intimement associées à la géométrie de la zone 16 qui est déplacée et un déplacement de la zone 16 correspond en fait à un déplacement du point P.

Lorsque l'utilisateur a choisi une localisation particulière de la zone d'efficacité 16, il actionne un moyen de validation (par exemple un autre bouton B2).

Le calculateur 12 fournit alors à un module de pointage 18 et à un module de programmation 19 les coordonnées du point de déclenchement souhaité P pour le projectile.

Ces coordonnées sont utilisées de façon classique par le module de pointage 18 pour commander les pointages en site et gisement du tube de l'arme 3.

Elles sont utilisées par le module de programmation 19 pour programmer l'instant de déclenchement du projectile 4 sur trajectoire.

L'invention a été décrite par souci de simplification dans une application à la commande du déclenchement d'un projectile unique.

Elle peut être mise en oeuvre de façon analogue pour la commande du tir d'une rafale de projectiles. Une rafale comprend un certain nombre de projectiles (4 à 10 par exemple) qui sont tirés successivement à la cadence de tir de l'arme.

De la même façon qu'il est possible par conception de définir une zone d'efficacité d'un projectile unique, il est aussi possible de définir une zone d'efficacité d'une rafale comportant un certain nombre de projectiles d'un type donné.

Les moyens de l'invention sont mis en oeuvre de la même façon que décrit précédemment.

Ce qui est visualisé sur l'écran ce n'est cependant plus la zone d'efficacité d'un projectile unique mais celle d'une rafale. Le point P de déclenchement correspond alors à un point moyen, barycentre des points de déclenchement des différents projectiles de la rafale. A partir du choix de la zone d'efficacité, on pourra aussi définir dans la conduite de tir une rafale assurant une initiation avec une dispersion statistique des instants d'initiation des projectiles de la rafale.

Une fois le positionnement de la zone d'efficacité 16 effectué par l'utilisateur, le calculateur 12 transmet comme précédemment au module de pointage 18 et au module de programmation 19 les différents paramètres de tir (angles de pointage) et de gestion de la rafale (programmation de l'instant de déclenchement de chaque projectile).

## Revendications

1. Procédé d'acquisition des coordonnées d'un point de déclenchement (P) d'un projectile (4) ou d'une rafale de projectiles sur trajectoire et au-dessus d'une portion de terrain (1) sur laquelle se trouve un objectif (5a,5b,5c), procédé ***caractérisé en ce qu***'il comporte les étapes suivantes:
on procède à une acquisition en trois dimensions de la portion de terrain (1) à l'aide d'un moyen d'observation laser (7),
on construit par calcul à partir de cette acquisition, puis on affiche sur un moyen de visualisation (14) destiné à un opérateur, une image de la portion de terrain (1) avec une direction d'observation plongeante (S2), c'est à dire une direction d'observation à partir d'un point (Z) situé à la verticale et plus haut que le moyen d'observation (7),
on positionne, d'une façon modifiable par l'opérateur, sur l'image ainsi calculée une zone d'efficacité (16) qui est une image d'une surface ou d'un volume géométrique permettant de visualiser l'aire ou le volume d'efficacité permettant d'assurer une probabilité d'atteinte ou de neutralisation donnée du projectile (4) ou de la rafale considéré lorsqu'il ou elle est déclenché au niveau d'un point de déclenchement (P),
on récupère les coordonnées du point de déclenchement (P) souhaité pour le projectile (4) ou la rafale lorsque l'opérateur a choisi la localisation qui lui convient après avoir déplacé la dite zone (16) sur l'image du terrain (1).

2. Procédé selon la revendication 1, **caractérisé en ce que** l'orientation de la direction d'observation (S2) est modifiable par l'opérateur lors de l'acquisition.

3. Conduite de tir (11) pouvant être associée à une arme (3) tirant des projectiles (4) ou des rafales de projectiles et permettant de fournir les coordonnées d'un point de déclenchement (P) pour un projectile ou une rafale tiré par l'arme, conduite de tir mettant en oeuvre le procédé selon une des revendications précédentes et **caractérisée en ce qu'**elle comprend:
au moins un moyen d'observation laser (7) permettant l'acquisition des coordonnées en trois dimensions d'une portion de terrain (1) observée,
un calculateur (12) pouvant reconstruire à l'aide d'un algorithme approprié au moins une image de la portion de terrain (1) dont les coordonnées ont été acquises, image qui est affichée sur un moyen de visualisation (14) avec une direction d'observation plongeante (S2), c'est à dire une direction d'observation à partir d'un point (Z) situé à la verticale et plus haut que le moyen d'observation (7),
un moyen de commande (15) destiné à un utilisateur et permettant de positionner et déplacer sur l'image du terrain (1) une zone d'efficacité (16) qui est elle-même une image d'une surface ou d'un volume géométrique permettant de visualiser l'aire ou le volume d'efficacité permettant d'assurer une probabilité d'atteinte ou de neutralisation donnée du projectile (4) ou de la rafale considéré lorsqu'il ou elle est déclenché au niveau d'un point de déclenchement (P),
le calculateur (12) déterminant de façon continue les coordonnées du point de déclenchement (P) lorsque la zone d'efficacité (16) est déplacée par l'opérateur,
un moyen de validation (B2) permettant à l'utilisateur de choisir une localisation particulière de la zone d'efficacité (16), le calculateur (12) fournissant alors les coordonnées du point de déclenchement (P) souhaité pour le projectile (4) ou la rafale.

4. Conduite de tir selon la revendication 3, **caractérisée en ce que** le calculateur (12) est associé à des premiers moyens mémoires (17) qui incorporent une modélisation géométrique des zones d'efficacité (16) pour les projectiles (4) ou rafales de projectiles associés à différents points de déclenchement (P).

5. Conduite de tir selon une des revendications 3 ou 4, **caractérisée en ce que** l'image de la zone d'efficacité (16) est semi-transparente.

6. Conduite de tir selon la revendication 5, **caractérisée en ce que** l'image de la zone d'efficacité (16) est dans une couleur différente de celle du reste de l'image.

7. Conduite de tir selon une des revendications 4 à 6, **caractérisée en ce que** des moyens de commande (15) permettent de modifier l'orientation de la direction d'observation (S2) lors de l'acquisition par un opérateur.

8. Conduite de tir selon une des revendications 3 à 7, **caractérisée en ce que** le moyen d'observation (7) est une caméra optique ou thermique couplée à un capteur laser 3D, l'image en trois dimensions étant obtenue en associant à chaque point de l'image de la caméra une information de distance acquise par le capteur laser 3D.

## Patentansprüche

1. Verfahren zur Erfassung der Koordinaten eines Auslösungspunkts (P) eines Geschosses (4) oder einer Salve von Geschossen auf der Flugbahn und oberhalb eines Geländeabschnitts (1), in dem sich ein Ziel (5a,5b,5c) befindet, wobei das Verfahren **dadurch gekennzeichnet ist, dass** es die folgenden Phasen umfasst:
dreidimensionale Aufnahme des Geländeabschnitts (1) mit Hilfe eines Laser-Beobachtungsmittels (7),
Berechnung ausgehend von dieser Aufnahme, dann Anzeige auf einem Anzeigemittel (14), das für einen Bediener bestimmt ist, eines Bildes des Geländeabschnitts (1) mit einer Beobachtungsrichtung von oben (S2), das heißt einer Beobachtungsrichtung von einer Punkt (Z), der in der Senkrechte und höher als das Beobachtungsmittel (7) gelegen ist,
Positionierung, auf eine durch den Bediener veränderbaren Art, eines Effektivitätsbereichs (16) auf dem so berechneten Bild, das ein Bild einer Oberfläche oder eines geometrischen Volumens ist, das es ermöglicht, den Bereich oder das Effektivitätsvolumen zu visualisieren, das es ermöglicht, eine Wahrscheinlichkeit des Erreichens oder der Neutralisierung des Geschosses (4) oder der Salve zu sichern, wenn es oder sie an einem Auslösungspunkt (P) ausgelöst wird,
Wiedergewinnung der Koordinaten des gewünschten Auslösungspunktes (P) für das Geschoss (4) oder die Salve, wenn der Bediener die für ihn günstigste Lokalisierung gewählt hat, nachdem er den genannten Bereich (16) auf dem Bild des Geländes (1) verschoben hat.

2. Verfahren nach Anspruch 1, **dadurch gekennzeichnet, dass** bei der Aufnahme die Ausrichtung der Beobachtungsrichtung (S2) durch den Bediener veränderbar ist.

3. Feuerleitanlage (11), die mit einer Waffe (3) zum Abschuss von Geschossen (4) oder Salven von Geschossen verbunden sein kann und die es ermöglicht, die Koordinaten eines Auslösungspunkts (P) für ein Geschoss oder eine Salve der Waffe zu liefern, wobei die Feuerleitanlage das Verfahren nach einem der vorherigen Patentansprüche umsetzt und **dadurch gekennzeichnet ist, dass** sie folgendes umfasst:
mindestens ein Laser-Beobachtungsmittel (7), das die dreidimensionale Aufnahme der Koordinaten eines beobachteten Geländeabschnitts (1) ermöglicht,
einen Rechner (12), der mit Hilfe eines geeigneten Algorithmus mindestens ein Bild des Geländeabschnitts (1) rekonstruieren kann, dessen Koordinaten erworben wurden, wobei das Bild auf einem Anzeigemittel (14) angezeigt wird, mit einer Beobachtungsrichtung von oben (S2), das heißt, einer Beobachtungsrichtung von einem Punkt (Z) aus, der in der Senkrechte und höher als das Beobachtungsmittel (7) gelegen ist,
ein Steuerungsmittel (15), das für einen Benutzer bestimmt ist und das es ermöglicht, auf dem Bild des Geländes (1) einen Effektivitätsbereich (16) zu positionieren und zu verschieben, der selbst ein Bild einer Oberfläche oder eines geometrischen Volumens ist, das es ermöglicht, den Bereich oder das Effektivitätsvolumen zu visualisieren, das es ermöglicht, eine Wahrscheinlichkeit des Erreichens oder der Neutralisierung des Geschosses (4) oder der Salve zu sichern, wenn es oder sie an einem Auslösungspunkt (P) ausgelöst wird,
wobei der Rechner (12) kontinuierlich die Koordinaten des Auslösungspunktes (P) bestimmt, wenn der Effektivitätsbereich (16) durch den Bediener verschoben wird,
ein Validierungsmittel (B2), das es dem Benutzer ermöglicht, eine besondere Lokalisierung des Effektivitätsbereichs (16) zu wählen, worauf der Rechner (12) die Koordinaten des gewünschten Auslösungspunktes (P) für das Geschoss (4) oder die Salve liefert.

4. Feuerleitanlage nach Anspruch 3, **dadurch gekennzeichnet, dass** der Rechner (12) mit ersten Speichermitteln (17) verbunden ist, die eine geometrische Modellierung der Effektivitätsbereiche (16) für die Geschosse (4) oder Salven von Geschossen enthalten, die verschiedenen Auslösungspunkten (P) zugeordnet sind.

5. Feuerleitanlage nach einem der Ansprüche 3 oder 4, **dadurch gekennzeichnet, dass** das Bild des Effektivitätsbereichs (16) halbtransparent ist.

6. Feuerleitanlage nach Anspruch 5, **dadurch gekennzeichnet, dass** das Bild des Effektivitätsbereichs (16) eine andere Farbe als der Rest des Bildes hat.

7. Feuerleitanlage nach einem der Ansprüche 4 bis 6, **dadurch gekennzeichnet, dass** Steuerungsmittel (15) es gestatten, die Ausrichtung der Beobachtungsrichtung (S2) bei der Aufnahme durch einen Bediener zu verändern.

8. Feuerleitanlage nach einem der Ansprüche 3 bis 7, **dadurch gekennzeichnet, dass** das Beobachtungsmittel (7) eine an einen 3D-Lasersensor gekoppelte optische oder Wärmebildkamera ist, wobei das dreidimensionale Bild erhalten wird, indem man jedem Punkt des Bildes der Kamera eine vom 3D-Lasersensor erworbene Abstandsinformation zuordnet.

## Claims

1. A method for acquiring the coordinates of a triggering point (P) of a projectile (4) or of a burst of projectiles on trajectory and above a plot of land (1) on which a target (5a, 5b, 5c) is located, method **characterised in that** it comprises the following steps:
performing a three-dimensional acquisition of the plot of land (1) using a means for laser observation (7),
constructing by calculation from this acquisition, and then displaying on a means for visualization (14) for an operator, an image of the plot of land (1) from a bird's eye view observation direction (S2), that is, an observation direction from a point (Z) located at the vertical and higher than the means for observation (7),
positioning, in a manner changeable by the operator, on the thus-calculated image an area of effectiveness (16) which is an image of a geometrical surface or volume allowing to visualize the area or volume of effectiveness, allowing to ensure a given hit or neutralization probability, of the projectile (4) or of the burst considered when triggered at a triggering point (P),
recovering the coordinates of the triggering point (P) desired for the projectile (4) or the burst when the operator has selected the location that suits him after having moved said area (16) on the image of the land (1).

2. The method according to claim 1, **characterised in that** the orientation of the observation direction (S2) can be changed by the operator during the acquisition.

3. A fire control (11) which can be associated with a weapon (3) firing projectiles (4) or bursts of projectiles and allowing to provide the coordinates of a triggering point (P) for a projectile or a burst fired by the weapon, the fire control implementing the method according to one of the preceding claims and **characterised in that** it comprises:
at least one means for laser observation (7) allowing the three-dimensional acquisition of the coordinates of an observed plot of land (1),
a computer (12) which can reconstruct using an appropriate algorithm at least one image of the plot of land (1), the coordinates of which have been acquired, which image is displayed on a means for visualization (14) from a bird's eye view observation direction (S2), that is, an observation direction from a point (Z) located at the vertical and higher than the means for observation (7),
a means for control (15) for a user and allowing to position and move on the image of the land (1) an area of effectiveness (16) which is itself an image of a geometrical surface or volume allowing to visualize the area or volume of effectiveness, allowing to ensure a given hit or neutralization probability, of the projectile (4) or of the burst considered when triggered at a triggering point (P),
the computer (12) continuously determining the coordinates of the triggering point (P) when the area of effectiveness (16) is moved by the operator,
a means for validation (B2) allowing the user to select a particular location of the area of effectiveness (16), the computer (12) then providing the coordinates of the triggering point (P) desired for the projectile (4) or the burst.

4. The fire control according to claim 3, **characterised in that** the computer (12) is associated with first memory means (17) which incorporate a geometrical modeling of the areas of effectiveness (16) for the projectiles (4) or bursts of projectiles associated with different triggering points (P).

5. The fire control according to one of claims 3 or 4, **characterised in that** the image of the area of effectiveness (16) is semi-transparent.

6. The fire control according to claim 5, **characterised in that** the image of the area of effectiveness (16) has a color different from that of the rest of the image.

7. The fire control according to one of claims 4 to 6, **characterised in that** the means for control (15) allow to change the orientation of the observation direction (S2) during the acquisition by an operator.

8. The fire control according to one of claims 3 to 7, **characterised in that** the means for observation (7) is an optical or thermal camera coupled to a 3D laser sensor, the three-dimensional image being obtained by associating, with each point of the image of the camera, distance information acquired by the 3D laser sensor.
